# EUROPEAN PATENT SPECIFICATION

(11) **EP 2 485 022 B1**
(45) Date of publication and mention of the grant of the patent: **13.11.2013**
(21) Application number: 12151696.7
(22) Date of filing: 19.01.2012
(51) Int. Cl.: G01J 5/06

(54) **Infra-red sensor**
Infrarotsensor
Capteur à infrarouges

(30) Priority: 02.02.2011 GB 201101819
(43) Date of publication of application: 08.08.2012
(73) Proprietor: Thales Holdings UK Plc, Addlestone Surrey KT15 2NX (GB)
(72) Inventor: Pallister, Stephen, Basingstoke, Hampshire RG21 4HJ (GB)
(74) Representative: Round, Edward Mark

(56) References cited:
- KR-A- 20110 024 357
- US-A- 6 144 031

## Description

This invention relates to the thermal management of an infra-red sensor to enable it to perform over a range of ambient temperatures. The sensor may be for example a ground-based, naval or airborne Optronics sensor,

Thermal management in Optronics equipment is usually designed around maximising heat removal at high temperatures, and supplying additional power to elevate temperatures at low temperature to allow electronics/optics/mechanics to function in sub-zero conditions.

Not only does this require additional power, but it also requires additional overheads of temperature sensors, cabling, electronics and software/firmware for closed loop feedback temperature control. These all add volume, mass and cost. Fan, connectors, electronics etc all reduce mean times between failures.

Inefficiencies in thermal heat removal at high temperatures can increase power requirements for fans, which themselves create additional power requirements and cooling loads.

US 6144031 discloses an uncoded infrared sensor which comprises a heat removal system based on a heat connecting two heat sinks.

Anti-icing in Optronics equipment is a particular problem (particularly for airborne equipment where it is not possible to manually de-ice the equipment) and usually involves resistive heating to increase the temperature of the device or lens in order for it to operate. Again this requires the use of power which may be at a premium in the case of airborne applications.

For some airborne applications, thermal management is a particular problem due to the external and isolated nature of the sensor positions on the airframe in order to get full 360° viewing coverage around the airframe. Sensor locations may be adjacent to a composite material and afford no thermal conduction paths. The airframe may be left to bake out on the tarmac in hot climates and reach >70°C. This would pose problems for the cryogenic detector and the electronics which have an operational limit of typically 85°C. The electronic control and processing and cryogenic cooling required for a typical IR detector consume around 45W at high temperatures. The lens housing and chassis may be made from Titanium Alloy, to allow the lens to remain focussed over the operating temperature range. Ti Alloy has a very low thermal conductance which isolates the lens from any heat generated in other parts of the equipment. The electronics may therefore be mounted to a separate chassis made e.g. from aluminium alloy which includes a rear mounted heat sink for dissipating the heat away from the sensor unit.

Furthermore, such sensors need to operate at low temperature down to -40°C, which requires that ice is prevented from forming on the front lens. Due to the wide angle nature of the lens, ice accretion on the surrounding frontal surfaces would also cause a problem, so the heat supplied has to be supplied to areas surrounding the lens to keep those free of ice as well. Ice accretion is most prevalent between temperatures of 2°C and -20°C, so the anti-icing has to work in these conditions as a minimum.

The invention is intended to overcome the deficiencies of such prior infra-red sensors, by improving thermal management for low temperature and high temperature operation.

The invention is defined according to claim 1.

The thermal distribution system operates passively, and so does not generate any heat itself nor require any power input. It can cool the processing and control circuit board in high temperature conditions, and it can maintain a satisfactorily high temperature of the lens and lens surround in sub-zero conditions. It also is generally more reliable than the prior active systems.

The use of waste heat generated by the electronics within the unit for anti-icing reduces the need for additional power for heating during low temperature operation. The increased efficiency of the cooling system at high temperature improves the performance of the sensor to allow operation at more extreme temperatures, or without external fans. Both of these measures will reduce the burden on host platform power supplies.

In order that the invention may be better understood, a preferred embodiment of the invention will now be described, by way of example only, with reference to the accompanying schematic drawings, in which:
Fig. 1 is a perspective view of an infra-red sensor embodying the invention, showing some of the internal parts in broken lines;
and Figs. 2 and 3 show principal components of the infra-red sensor of Fig. 1 with reference to high temperature and low temperature operation respectively.

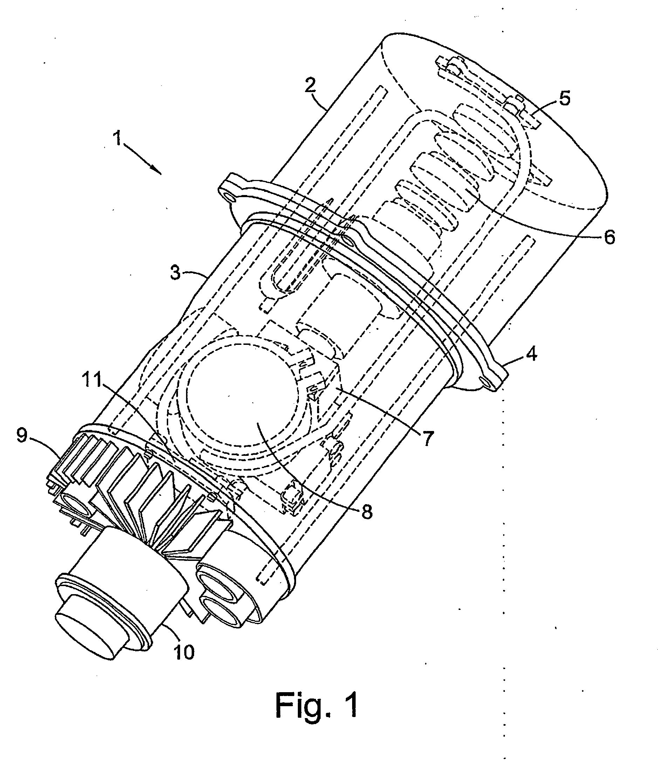

An infra-red sensor embodying the invention is shown in Figs. 1 to 3, the sensor 1 comprising two housing components 2, 3 joined at flanges 4. An arrangement of infra-red lenses 6 conveys infra-red light to an infra-red detector unit 7 housed in a vacuum container and connected thermally to a Stirling cycle cooler 8. The cooler 8 has an electric motor driving a compressor which, as is well known, pumps heat from one area to another, in this example from the infra-red detector 7 to a thermal interface 11 connected to a fin type heat sink 9 for dissipating heat outside the sensor 1. An electric motor fan 10 assists in the dissipation of heat from the fins of the heat sink 9 although this may not be needed depending on the ambient temperatures the unit has to work over and the overall thermal dissipation of the unit.

The electronic processing and control of the various components of the sensor is mounted on four circuit boards 17a, 17b, 17c and 17d within the sensor housing, and disposed around the lens arrangement 6. This processing and control circuitry controls the operation of the infra-red detector 7, which processes the image and outputs an electronic signal representative of the infra-red image. There is also control circuitry for selectively operating the cooling fan 10 if fitted, preferably by switching the fan on when the temperature of the sensor, as measured by a temperature sensing circuit (not shown), rises above a predetermined threshold temperature. Processing and control circuitry also controls the operation of the Stirling cycle cooler 8, which is switched on when it is required, either to cool the detector 7 in high temperature conditions, or to generate heat to assist in the maintenance of a sufficiently high temperature in the region of the front lens of the lens assembly 6.

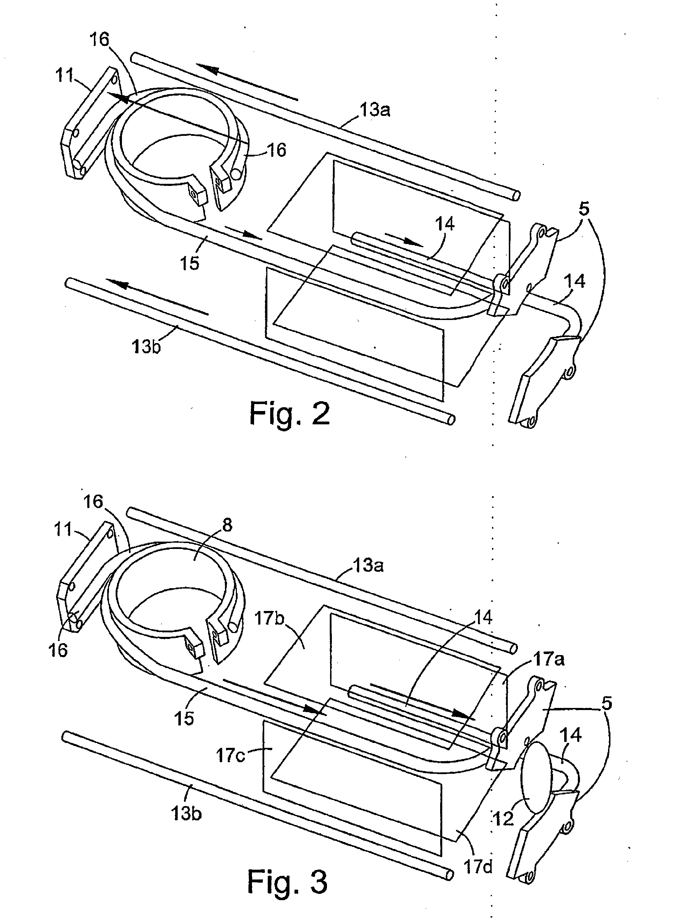

As shown in Fig. 3, a Kapton tape lens heater 12 is arranged adjacent the front lens of the lens arrangement 6, to heat the lens and its surroundings in low temperature conditions, and this heater is selectively switched on by the processing and control circuitry, in response to the sensed temperature. This heater is used to augment the heat supplied by the heat pipes, and depending on environmental performance required may not be necessary.

The front lens and its surrounding area are in thermal contact with thermal interface plates 5 at the front of the sensor 1, and one of these plates is connected by a heat pipe 14 to the circuit boards 17a to 17d, for thermal management.

The circuit boards 17a to 17d are also connected, by a pair of parallel heat pipes 13a, 13b, to the heat sink 9.

The Stirling cycle cooler 8 is also connected thermally by a heat pipe 15 to one of the thermal interface plates 5, for heating the front lens arrangement when necessary using heat from the detector and heat generated by the motor and compressor. A further heat pipe 16 connects the Stirling cycle cooler 8 to the thermal interface plate 11 of the heat sink 9.

In this example, the heat pipes 14 and 15 that need to operate even in low temperature conditions are preferably copper-methanol pipes. The other heat pipes 13a, 13b and 16 are preferably copper-water heat pipes, which give more efficient thermal transfer than the copper-methanol heat pipes, and which have the advantage of becoming inoperative in freezing conditions.

The heat pipes are brazed onto the collars or plates 5, 11 etc., in order to maximise heat transfer. Although not shown, the portion of the housing 2 that surrounds the front lens at the front of the sensor 1 is thermally conductive and is connected thermally to the plates 5. Although in this example each heat pipe 14, 15 is connected only to a respective one of the plates 5, alternative arrangements are possible.

The operation of the sensor in high temperature conditions, such as between 0C and 85C, will now be described with reference particularly to Fig. 2. The copper-methanol heat pipes 14, 15, because of their ability to function at temperatures up to 125C, are still functioning satisfactorily, moving heat passively from warmer to cooler areas. Accordingly, they assist in dissipating heat from the Stirling cycle cooler, and from the circuit boards, to the front region of the sensor 1 surrounding the lens. The Stirling cycle cooler 8 is driven by its motor to cool the infra-red detector unit 7, and to dissipate heat through the heat sink 9 by way of the plate 11. The copper-water heat pipes 13a, 13b convey heat from the circuit boards 17a to 17d to the heat sink 9. The rear fan 10 is switched on at temperatures above 5°C, to enhance the thermal convection and heat dissipation at the rear of the unit.

In this example, the copper-water heat pipes are typically of 4mm diameter, to provide sufficient thermal transfer capability to handle 13 Watts from the detector 7 and 7.5 Watts from each of the four circuit boards 17a to 17d, as well as heat from the cooling engine motor and compressor.

Low temperature operation is illustrated particularly in Fig. 3. Since the water filling the heat pipes 13a, 13b and 16 has a higher freezing point than the liquid of the other heat pipes which are copper-methanol, these heat pipes become passively non-operational in accordance with their temperature being below 0C. In low temperatures, for example -75C to 0C, the copper-water pipes are frozen and cease to function, decreasing the removal of heat to the rear of the unit, and maximising thermal heat movement to the front lens. The heat pipe 14 moves heat from the circuit boards to one of the plates 5, while the heat pipe 15 moves heat from the cooler 8, which can be left on for this purpose, to the other of the plates 5. The lens heater 12 is also switched on.

In this example, the copper-methanol heat pipes are 6mm in diameter, for transporting 13 Watts from the cooling engine 8 and 15 Watts from each pair of circuit boards 17a to 17d. These heat pipes are embedded into the skeleton chassis of the sensor 1 and are routed past the boards to emerge at each end.

Not every component of the sensor of Figs. 1 to 3 is essential In particular, the electric fan 10, the Stirling cycle cooler 8 and the tape lens heater 12 are optional.

For higher thermal dissipation during high temperature operation, an additional heat pipe (not shown) may be mounted externally of the sensor in place of the rear heat sink 9. This is ideally a loop heat pipe for moving the heat over substantial distances with low losses. A looped heat pipe is one that is able to work in any orientation. It can move heat larger distances than conventional heat pipes with less loss. This is useful as heat movement is driven by the temperature differential, so high losses reduce the differential and reduce the amount of heat that can be removed. Moving it over larger distances mean there is a better chance to remove the heat to an external surface or a larger heat sink in a more advantageous location for heat removal. http:llwww.thermacore,com/products/loop-heat-pipes-and-loop-devices.aspx

Different working fluids of the heat pipes may of course be selected to suit the operating conditions and the particular application of the sensor.

## Claims

1. An infra-red sensor comprising an infra-red lens arrangement (6) an and disposed around the lens arrangement infra-red detector (7) and a processing and control circuit (17a-17d) connected to the detector (7) and disposed around the lens arrangement and arranged and arranged to provide an output infra-red image signal, a heat extraction device (9) for dissipating excess heat from the sensor, and a passive thermal distribution system comprising at least one first heat pipe (13a) linking the processing and control circuit board (17a-17b) thermally to the heat extraction device (9), and at least one second heat pipe (14) linking the lens arrangement (6) thermally to the processing and control circuit (17a-17d) wherein the first heat pipe (13a) or pipes are filled with a liquid whose freezing point is higher than that of the liquid in the second heat pipe (14) or pipes, such that the first heat pipe(s) (13a) becomes inoperative at freezing conditions and the second heat pipe(s) (14) operates in freezing conditions.

2. A sensor according to claim 1, comprising a Stirling cycle cooler (8) arranged to pump heat from the detector (7) to the heat extraction device (9).

3. A sensor according to claim 2, in which the Stirling cycle cooler is connected thermally to the infra-red lens arrangement (6) by a third heat pipe (15) of the thermal distribution system, for heating the lens arrangement with waste heat from the Stirling cycle cooler for anti-icing purposes.

4. A sensor according to any preceding claim, comprising an electric heater (17) adjacent the infra-red lens arrangement for heating it selectively.

5. A sensor according to claim 4, in which the processing and control circuit is arranged to monitor the temperature of the infra-red sensor and to switch on the electric heater (17) when the temperature is below a predetermined threshold to augment the passive heating supplled.

6. A sensor according to any preceding claim, in which the first heat pipe (13a) or pipes is filled with water.

7. A sensor according to any preceding claim, in which the second heat pipe (14) or pipes is filled with methanol.

8. A sensor according to any preceding claim, in which the heat extraction device comprises a heat sink (9).

9. A sensor according to any preceding claim, in which the heat extraction device comprises an electric fan to provide additional cooling.

10. A sensor according to claim 9, in which the processing and control circuit is arranged to monitor the temperature of the infra-red sensor and to switch the electric fan on only when the temperature is above a predetermined threshold.

11. A sensor according to any preceding claim, in which the heat extraction device comprises a loop heat pipe.

## Patentansprüche

1. Infrarotsensor, der aufweist: eine Infrarotlinsenanordnung (6); einen Infrarotdetektor (7); und eine Verarbeitungs- und Steuerschaltung (17a-17d), die mit dem Detektor (7) verbunden und um die Linsenanordnung angeordnet ist, und angeordnet, um einen Infrarotbildsignalausgang zu liefern; eine Wärmeentzugsvorrichtung (9) für das Abführen von überschüssiger Wärme vom Sensor; und ein passives Wärmeverteilungssystem, das mindestens ein erstes Wärmerohr (13a), das die Verarbeitungs- und Steuerleiterplatte (17a-17d) thermisch mit der Wärmeentzugsvorrichtung (9) verbindet, und mindestens ein zweites Wärmerohr (14) aufweist, das die Linsenanordnung (6) thermisch mit der Verarbeitungs- und Steuerschaltung (17a-17d) verbindet, wobei das erste Wärmerohr (13a) oder die ersten Wärmerohre mit einer Flüssigkeit gefüllt ist/sind, deren Gefrierpunkt höher ist als der der Flüssigkeit im zweiten Wärmerohr (14) oder den zweiten Wärmerohren, so dass das erste Wärmerohr (13a) (die ersten Wärmerohre) bei Gefrierbedingungen unwirksam wird (werden) und das zweite Wärmerohr (14) (die zweiten Wärmerohre) bei Gefrierbedingungen funktioniert (funktionieren).

2. Sensor nach Anspruch 1, der einen Stirling-Zyklus-Kühler (8) aufweist, der angeordnet ist, um Wärme vom Detektor (7) zur Wärmeentzugsvorrichtung (9) zu pumpen.

3. Sensor nach Anspruch 2, bei dem der Stirling-Zyklus-Kühler thermisch mit der Infrarotlinsenanordnung (6) mittels eines dritten Wärmerohres (15) des Wärmeverteilungssystems verbunden ist, um die Linsenanordnung mit der Abwärme vom Stirling-Zyklus-Kühler für Vereisungsschutzzwecke zu erwärmen.

4. Sensor nach einem der vorhergehenden Ansprüche, der einen elektrischen Heizer (17) benachbart der Infrarotlinsenanordnung für deren selektives Erwärmen aufweist.

5. Sensor nach Anspruch 4, bei dem die Verarbeitungs- und Steuerschaltung angeordnet ist, um die Temperatur des Infrarotsensors zu überwachen, und um den elektrischen Heizer (17) einzuschalten, wenn die Temperatur unterhalb eines vorgegebenen Schwellenwertes ist, um die zugeführte passive Heizung zu verstärken.

6. Sensor nach einem der vorhergehenden Ansprüche, bei dem das erste Wärmerohr (13a) oder die ersten Wärmerohre mit Wasser gefüllt ist/sind.

7. Sensor nach einem der vorhergehenden Ansprüche, bei dem das zweite Wärmerohr (14) oder die zweiten Wärmerohre mit Methanol gefüllt ist/sind.

8. Sensor nach einem der vorhergehenden Ansprüche, bei dem die Wäimeentzugsvorrichtung einen Wärmeableiter (9) aufweist.

9. Sensor nach einem der vorhergehenden Ansprüche, bei dem die Wärmeentzugsvorrichtung ein elektrisches Gebläse aufweist, um eine zusätzliche Kühlung zu bewirken.

10. Sensor nach Anspruch 9, bei dem die Verarbeitungs- und Steuerschaltung angeordnet ist, um die Temperatur des Infrarotsensors zu überwachen, und um das elektrische Gebläse erst einzuschalten, wenn die Temperatur über einem vorgegebenen Schwellenwert liegt.

11. Sensor nach einem der vorhergehenden Ansprüche, bei dem die Wärmeentzugsvorrichtung eine Wärmerohrschleife aufweist.

## Revendications

1. Capteur à infrarouge, comprenant un assemblage de lentille à infrarouge (6), un détecteur à infrarouge (7) et un circuit de traitement et de commande (17a-17d), connecté au détecteur (7) et agencé autour de l'assemblage de lentille, destiné à fournir un signal d'image à infrarouge de sortie, un dispositif d'extraction de chaleur (9) pour dissiper la chaleur excessive du capteur, et un système de distribution thermique passive, comprenant au moins un premier caloduc (13a) assurant la liaison thermique de la carte de circuit de traitement et de commande (17a-17d) et du dispositif d'extraction de chaleur (9), et au moins un deuxième caloduc (14), assurant la liaison thermique de l'assemblage de lentille (6) et du circuit de traitement et de commande (17a-17d) dans lequel le premier caloduc (13a) ou les premiers caloducs sont remplis d'un liquide dont la point de congélation est supérieur à celui du liquide dans le deuxième ou les deuxièmes caloduc (s) (14), de sorte que le premier (les premiers) caloduc(s) (13a) ne fonctionne (fonctionnent) plus en présence de conditions de congélation, le(s) deuxième(s) caloducs(s) fonctionnant en présence de conditions de congélation.

2. Capteur selon la revendication 1, comprenant un refroidisseur à cycle de Stirling (8) destiné à pomper la chaleur du détecteur (7) vers le dispositif d'extraction de chaleur (9).

3. Capteur selon la revendication 2, dans lequel le refroidisseur à cycle de Stirling est connecté thermiquement à l'assemblage de lentille à infrarouge (6) par un troisième caloduc (15) du système de distribution thermique, pour chauffer l'assemblage de lentille avec de la chaleur résiduelle provenant du refroidisseur à cycle de Stirling, pour des objectifs d'antigivrage.

4. Capteur selon l'une quelconque des revendications précédentes, comprenant un dispositif de chauffage électrique (17) adjacent à l'assemblage de lentille à infrarouge, en vue de son chauffage sélectif.

5. Capteur selon la revendication 4, dans lequel le circuit de traitement et de commande est destiné à surveiller la température du capteur à infrarouge et à brancher le dispositif de chauffage électrique (17) lorsque la température est inférieure à une valeur de seuil prédéterminée, afin d'accroître le chauffage passif fourni.

6. Capteur selon l'une quelconque des revendications précédentes, dans lequel le premier caloduc ou les premiers caloducs (13a) est (sont) rempli(s) d'eau.

7. Capteur selon l'une quelconque des revendications précédentes, dans lequel le(s) deuxième(s) caloduc(s) est (sont rempli(s) de méthanol.

8. Capteur selon l'une quelconque des revendications précédentes, dans lequel le dispositif d'extraction de chaleur comprend un dissipateur de chaleur (9).

9. Capteur selon l'une quelconque des revendications précédentes, dans lequel le dispositif d'extraction de chaleur comprend un ventilateur électrique pour assurer un refioidissement additionnel.

10. Capteur selon la revendication 9, dans lequel le circuit de traitement et de commande est destiné à surveiller la température du capteur à infrarouge et à brancher le ventilateur électrique uniquement lorsque la température est supérieure à une valeur de seuil prédéterminée.

11. Capteur selon l'une quelconque des revendications précédentes, dans lequel le dispositif d'extraction de chaleur comprend un caloduc en boucle.
